# EUROPÄISCHE PATENTSCHRIFT

(11) **EP 3 527 834 B1**
(45) Veröffentlichungstag und Bekanntmachung des Hinweises auf die Patenterteilung: **09.12.2020**
(21) Anmeldenummer: 19157016.7
(22) Anmeldetag: 13.02.2019
(51) Int. Cl.: F15B 19/00, F15B 20/00, F16K 37/00, G05B 23/02, G05B 17/00

(54) **BESTIMMEN DER FUNKTIONSFÄHIGKEIT EINES FLUIDISCH ANGETRIEBENEN SICHERHEITSVENTILS**
DETERMINATION OF THE FUNCTIONALITY OF A FLUID DRIVEN SAFETY VALVE
DÉTERMINATION DE LA FONCTIONNALITÉ D'UNE SOUPAPE DE SÉCURITÉ À ENTRAÎNEMENT FLUIDIQUE

(30) Priorität: 14.02.2018 DE 102018103324
(43) Veröffentlichungstag der Anmeldung: 21.08.2019
(73) Patentinhaber: Samson Aktiengesellschaft, 60314 Frankfurt am Main (DE)
(72) Erfinder: Wagner-Stürz, David, 64367 Mühltal (DE)
(74) Vertreter: Köllner, Malte

(56) Entgegenhaltungen:
- WO-A2-2015/171843
- DE-A1- 4 218 320
- US-A- 5 197 328

## Beschreibung

### Gebiet der Erfindung

Stellarmaturen bestehen aus einem Antrieb und einem beweglichen Ventilglied. Sie dienen zum Regulieren eines Fluidstromes. Die Antriebsstange des Ventilglieds wird in der Regel durch ein fluiddichtes Gehäuse oder einen Deckel des Ventils nach außen geführt. Eine Dichtung (z.B. Packung) dichtet die Antriebsstange zum Ventil-Gehäuse-Deckel hin nach außen ab. Außerhalb befindet sich ein Antrieb, welcher auf die Antriebsstange wirkt und das Ventilglied bewegt. Als Antrieb zum Bewegen der Antriebsstange dienen typischerweise fluidische Antriebe (in der Regel pneumatische). Die Art der Ventile können sowohl Drehventile als auch Hubventile sein.

Beim Bewegen des Ventilglieds mittels des Antriebs treten verschiedene Haft- und Gleitreibungen auf. Die Ursachen für die Reibung können sein:
- die Dichtung zwischen der Antriebsstange und dem Ventil-Gehäuse-Deckel
- Reibung zwischen der Antriebsstange und der Antriebsgehäuse-Abdichtung
- bei Drehventilen: Reibung des Drehelementes an den Dichtlippen
- bei Hubventilen: Reibung z.B. der Gleitschieber an den Dichtlippen
- Verkrustungen durch Korrosion oder Partikel im Fluid
- Reibung im Antrieb durch Abdichtelemente des Kolbens zum fluidischen Trennen der Antriebskammern

Auf/Zu-Stellarmaturen neigen dazu, bei längeren Stillstandszeiten zu verkleben. Eine erhöhte Haftreibung verlangt dem Antrieb große Kräfte ab. Bei pneumatischen Antrieben wird ein hoher Druck benötigt, um das Stellventil gegen die Haftreibung loszureißen. In der Hub-Druck-Kurve der Armatur ist ein erhöhter Anstieg bzw. Abfall des Drucks zu sehen, bis eine Wegänderung detektiert werden kann.

Im Bereich sicherheitsrelevanter Armaturen werden in der Regel einfachwirkende Pneumatikantriebe verwendet. Die von Federkräften einseitig vorgespannten Antriebe verfahren eigenständig in eine sichere Position, wenn der Antrieb entlüftet wird, also die Druckluft aus der Kammer des Antriebes entweicht. Dies geschieht z.B. dann, wenn ein Strom-Druck(I/P)-Wandler oder ein Magnetventil nicht mehr bestromt wird.

Bei Sicherheitsarmaturen ist häufig das Sicherheitsventil im normalen Betrieb offen, und im Fehlerfall (z.B. Stromausfall) schließt das Sicherheitsventil eigenständig. Die Druckluft wirkt immer gegen die Federkraft. Entlüftet man nun den Antrieb, beginnt das Ventil sich zu schließen, da die Federkräfte freigesetzt werden. In der Hub-Druck-Kurve bewirkt diese Konfiguration, dass sich das Ventil gegen die Haftreibung losreißt, wenn die Druckluft reduziert wird.

Die Sicherheitsstellung kann auch stromlos offen sein (Antrieb entlüftet) und bestromt geschlossen (Antrieb belüftet).

### Stand der Technik

Um den sicheren Betrieb einer solchen Armatur zu gewährleisten, wird zyklisch getestet, ob sich das Stellglied auch bewegt. Bei diesen Tests ist es nicht gewünscht, dass die Armatur vollständig in die Sicherheitsstellung verfährt, um den laufenden Betrieb nicht zu stören. Um dies zu vermeiden, wurde der *Partial Stroke Test* (PST, Teilhubtest) eingeführt. Das Stellglied wird nur soweit verfahren, dass das Stellglied sicher einen Teil der Strecke verfährt, ohne den Prozess der Anlage maßgeblich zu beeinflussen. Um ein Überschwingen zu vermeiden, muss der Druck der Druckluft nach dem Losbrechen wieder erhöht werden. Ein gleichmäßiges Weiterbewegen in Richtung Schließstellung wird erreicht, wenn der Druck der Druckluft anschließend kontrolliert reduziert wird, also der Antrieb langsam entlüftet. Nachdem das Stellglied einen ausreichenden Teil der Strecke verfahren wurde, wird es wieder in die Ausgangsposition zurückgefahren. Mit diesem Test kann die grundlegende Bewegbarkeit des Stellgliedes geprüft werden.

Nachteilig ist allerdings, dass keine Aussage getroffen werden kann, ob das Stellglied auch noch mit der verbleibenden Federkraft oder der Druckkraft der Druckluft im Antrieb in die sichere Stellung verfahren würde.

Eine Stelleinrichtung für ein Auf-Zu-Ventil mit pneumatischem Antrieb, bei der ein Stellungsregler vorhanden ist, der eine Routine zu Durchführung eines Teilhubtests enthält, ist in der Druckschrift WO 2009/013205 A1 beschrieben. Vorkehrungen, um zu ermitteln, ob die Sicherheitsstellung tatsächlich erreicht werden kann, sind hier jedoch nicht beschrieben.

Die Offenlegungsschrift DE 42 18 320 A1 beschreibt ein Verfahren und eine Einrichtung, die während eines Schaltvorgangs einer Armatur die zeitlichen Verläufe einer systemrelevanten und einer armaturrelevanten Messgröße aufnehmen können. Dies kann z.B. auch ein Hub-Druck-Verlauf sein. Durch Veränderungen bei späteren Schaltvorgängen kann dann auf den Zustand der Armatur geschlossen werden. Nachteilig ist hierbei unter anderem, dass kein Teilhubtest vorgesehen ist, der Betrieb also bei jeder Prüfung beeinträchtigt werden muss.

Ähnliches offenbart die Druckschrift US 5,197,328. Auch dort wird der Betriebszustand eines pneumatisch betriebenen Ventils untersucht, und auch in diesem Fall wird der volle Bewegungsverlauf zwischen dem offenen und dem geschlossenen Zustand des Ventils durchfahren.

In der Schrift DE 60 2004 012 980 T2 wird ein Verfahren und ein System zum Durchführen von Ventildiagnosen und zum Ableiten von Ventilcharakteristiken beschrieben, wobei eine Mehrzahl von sequentiellen Einstellpunkten abgefahren werden, und wobei aus den dabei aufgenommenen Daten Impulsantwort, Reibung oder Federbereich des Ventils abgeleitet werden. Hierbei geht es vor allem darum, wie schnell bzw. unmittelbar das Ventil auf Schalt- oder Regelimpulse reagiert. Ob die Sicherheitsstellung erreicht werden kann, wird hierbei nicht explizit geprüft, insbesondere nicht, ohne den Betrieb der Anlage zu beeinträchtigen.

Ein gattungsgemäßes Verfahren zum Bestimmen der Funktionsfähigkeit eines fluidisch angetriebenen Sicherheitsventils ist aus der Druckschrift WO 2015/171843 A2 bekannt.

### Aufgabe

Aufgabe der Erfindung ist, ein Verfahren anzugeben, mit welchem anhand eines Teilhubtests eine Aussage über das sichere Erreichen der Sicherheitsstellung getroffen werden kann.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird das erfindungsgemäße Verfahren zum Bestimmen der Funktionsfähigkeit eines fluidisch angetriebenen Sicherheitsventils vorgeschlagen.

Dabei ist zunächst klarzustellen, dass das Sicherheitsventil ein Ventilglied und eine Feder-Rückstellung aufweist, wobei das Ventilglied bei einem Stromausfall oder einem ungesteuerten Abfall des Drucks des Antriebsfluids durch die Feder-Rückstellung in eine Sicherheitsstellung bewegt wird.

Das Sicherheitsventil verfügt über Mittel zum Bestimmen des Drucks des Antriebsfluids. Diese können sehr unterschiedlich sein, etwa die Korrelation des Stroms eines Strom-Druck(I/P)-Wandlers auf den Druckwert oder auch ein separater Sensor. Der Druck des Antriebsfluids wirkt gegen die Feder.

Außerdem verfügt das Sicherheitsventil über Mittel zum Bestimmen der Stellung des Ventilglieds. Hier bieten sich Sensoren an, z.B. Magnetsensoren, wobei die Stellung eines Magneten proportional zur Antriebsstangenstellung ist.

Das eigentliche Verfahren läuft wie folgt ab: Ein Teilhubtest wird an dem Sicherheitsventil mittels Variation des Drucks im Antriebsfluid durchgeführt. Die Stellung des Ventilglieds in Abhängigkeit des Drucks im Antriebsfluid wird während des Teilhubtests aufgezeichnet, wodurch eine Hub-Druck-Kurve erhalten wird. Einerseits wird dadurch festgestellt, ob das Ventilglied überhaupt noch losbricht, andererseits erhält man den Verlauf der Hub-Druck-Kurve.

Die Hub-Druck-Kurve wird über den gemessenen Bereich hinaus mathematisch modelliert und anschließend bis zur Sicherheitsstellung des Ventilglieds extrapoliert. Der zu dieser Sicherheitsstellung in der mathematisch ermittelten Hub-Druck-Kurve gehörende Druck wird ermittelt. Nur wenn diese höher ist als der Druck in der zu regulierenden Flüssigkeit am Ventilglied, kann das Sicherheitsventil seine Sicherheitsfunktion noch erfüllen.

Mit dem vorgeschlagenen Verfahren kann somit neben dem Test des Losbrechens des Ventilglieds auch ermittelt werden, ob das Ventilglied seine Sicherheitsstellung noch erreichen kann, die Funktion des Sicherheitsventils also noch erfüllt werden kann.

Am leichtesten ist es, wenn für die Extrapolation der Hub-Druck-Kurve die Hub-Druck-Kurve in einem relevanten Bereich durch eine Geradengleichung modelliert wird. Die Geradengleichung für die Hub-Druck-Kurve wird dazu aus mindestens zwei während des Teilhubtests gemessenen Hub-Druck-Werten ermittelt.

Sinnvollerweise werden die mindestens zwei während des Teilhubtests gemessenen Hub-Druck-Werte aus dem Bereich nach dem Überwinden der Haftreibung des Ventilglieds aufgenommen.

Möchte man eine höhere Genauigkeit erreichen, als es mit einer einfachen Geraden möglich ist, bietet es sich an, bei Inbetriebnahme des Sicherheitsventils eine Hub-Druck-Kennlinie für das Sicherheitsventil aufzunehmen. Die Hub-Druck-Kurve wird dann dadurch über den gemessenen Bereich hinaus mathematisch modelliert, dass die bei Inbetriebnahme des Sicherheitsventils aufgenommene Hub-Druck-Kennlinie auf einen während des Teilhubtests nach dem Überwinden der Haftreibung des Ventilglieds gemessenen Hub-Druck-Wert verschoben wird. Dies ist insbesondere dann vorteilhaft, wenn die Hub-Druck-Kurve des Sicherheitsventils einen nichtlinearen Verlauf aufweist.

Außerdem genügt dann das Messen eines einzigen Punktes auf der tatsächlichen Hub-Druck-Kurve während des PST.

Diese aufgenommene Kennlinie lässt sich (bei zumindest annähernd linearem Verlauf) wiederum dadurch vereinfachen und gegen Interpolationsfehler absichern, dass sie durch eine Gerade angenähert wird oder durch mehrere Stützpunkte und oder Gleichungsfunktionen angenähert wird.

Es genügt dann weiterhin das Messen nur eines einzigen Punktes auf der tatsächlichen Hub-Druck-Kurve während des PST.

Die Aufgabe wird ferner gelöst durch ein fluidisch angetriebenes Sicherheitsventil mit einem Ventilglied und einer Feder-Rückstellung, wobei das Ventilglied bei einem Stromausfall oder einem ungesteuerten Abfall des Drucks des Antriebsfluids durch die Feder-Rückstellung in eine Sicherheitsstellung bewegt wird.

Das Sicherheitsventil verfügt über Mittel zum Bestimmen des Drucks des Antriebsfluids, wobei der Druck des Antriebsfluids gegen die Feder wirkt. Ferner verfügt es über Mittel zum Bestimmen der Stellung des Ventilglieds.

Insbesondere weist das Sicherheitsventil eine Steuerung zum Durchführen des weiter oben beschriebenen Verfahrens auf, wobei die Steuerung in der Lage ist, einen Teilhubtest an dem Sicherheitsventil mittels Variation des Drucks im Antriebsfluid durchzuführen. Bei der Durchführung eines Teilhubtests zeichnet die Steuerung die Stellung des Ventilglieds in Abhängigkeit des Drucks im Antriebsfluid während des Teilhubtests auf, wodurch eine Hub-Druck-Kurve erhalten wird. Die Steuerung modelliert ferner die Hub-Druck-Kurve über den gemessenen Bereich hinaus mathematisch und extrapoliert anschließend die mathematisch ermittelte Hub-Druck-Kurve bis zur Sicherheitsstellung des Ventilglieds. Auf diese Weise ist die Steuerung in der Lage, den zu dieser Sicherheitsstellung in der mathematisch ermittelten Hub-Druck-Kurve gehörenden Druck zu ermitteln. Eine weitere Möglichkeit ist, dass die Hub-Druck-Kurve in der Steuerung (Stellungsregler) aufgezeichnet wird und die Daten zur Auswertung und Interpolation an einen anderen Rechner übermittelt werden. Der andere Rechner übermittelt die Ergebnisse wiederum zur Anzeige an den Stellungsregler und oder an eine beliebige andere Anzeige und oder Warnmeldeeinheit. Auf diese Weise sind alle Informationen diesbezüglich jederzeit an beliebigen Orten verfügbar. (z.B. mittels Cloud).

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1A: den typischen Aufbau eines fluidisch angetriebenen Sicherheitsventils in geöffneter Stellung;
- Fig. 1B: den typischen Aufbau eines fluidisch angetriebenen Sicherheitsventils in geschlossener Stellung;
- Fig. 2: den Hub und den Druck über der Zeit während eines *Partial Stroke Tests* (PST) an einem Sicherheitsventil;
- Fig. 3: eine Hub-Druck-Kurve;
- Fig. 4: ein weiteres Beispiel für die Losbrech-Reserve und die Schließdruck-Reserve; und
- Fig. 5: ein Beispiel für eine negative Schließdruck-Reserve.

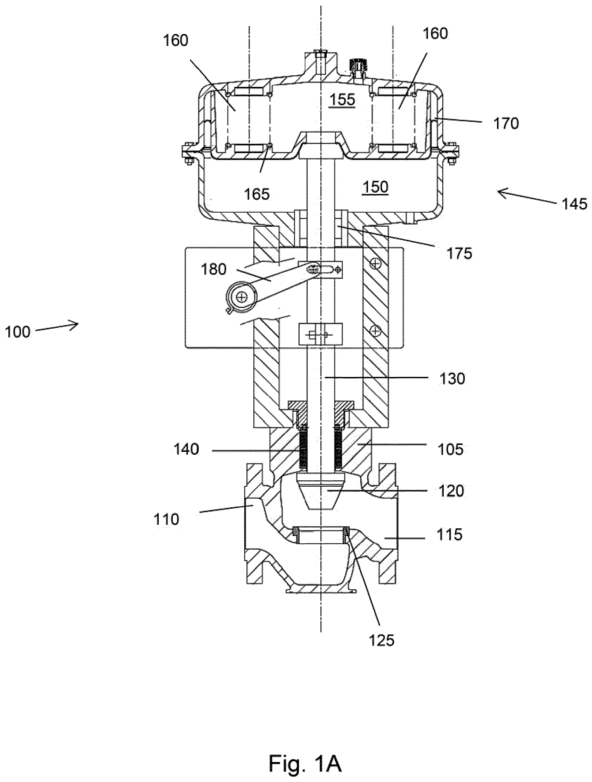

Fig. 1A zeigt einen typischen Aufbau eines fluidisch angetriebenen, einfachwirkenden Prozessventils 100 mit einem Ventilgehäuse 105. Zwischen der Zuströmseite 110 und der Abströmseite 115 befindet sich ein Ventilglied 120, das zum Drosseln der Strömung eines von der Zuströmseite 110 zur Abströmseite 115 fließenden Prozessfluids in den Ventilsitz 125 gepresst werden kann. Dazu dient die Ventilstange bzw. Antriebsstange 130. Die Durchführung der Ventilstange 130 durch das fluiddichte Ventilgehäuse 105 ist durch eine Dichtung bzw. Stopfbuchse 140 abgedichtet.

Am oberen Ende der Ventilstange 130 befindet ein fluidischer Antrieb 145, wobei das Antriebsfluid typischerweise Gas ist. Der Antrieb 145 weist zwei Kammern auf, eine untere Druckluftkammer 150 und eine obere Kammer 155, in der zwei Federn 160 über eine Platte 165 auf die Ventilstange 130 einwirken. Die beiden Kammern 150 und 155 sind durch eine Membran 170 voneinander getrennt, wobei die Membran 170 undurchlässig ist gegenüber dem Antriebsfluid, typischerweise Druckluft. Ein solcher Aufbau wird als einfachwirkender Pneumatikantrieb bezeichnet, da nur in eine Kammer, die Druckluftkammer 150, Druckluft eingeführt wird und nicht in beide. Die Durchführung der Ventilstange 130 durch das Gehäuse des Antriebs 145 muss dicht sein gegenüber dem Antriebsfluid. Zu diesem Zweck ist diese Durchführung durch eine Antriebsgehäuse-Abdichtung 175 abgedichtet.

Typischerweise befindet sich an der Ventilstange 130 noch ein Signalnehmer 180 zum Bestimmen der Position des Ventilglieds 120.

In Fig. 1A befindet sich ausreichend Druckluft in der Druckluftkammer 150, so dass das Prozessventil 100 geöffnet ist.

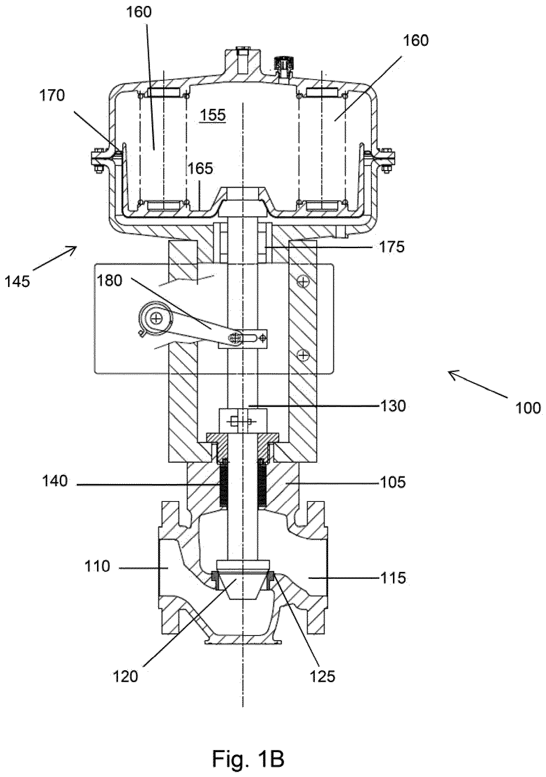

In Fig. 1B ist die Druckluftkammer 150 entlüftet, so dass die Federn 160 das Prozessventil 160 schließen konnten.

Ein solches Prozessventil ist grundsätzlich geeignet, als Sicherheitsventil eingesetzt zu werden, da es bei unkontrolliertem Entlüften automatisch schließt.

Bei einem Auf/Zu-Ventil kann es zu zwei Arten von Kräften bzw. Drehmomenten kommen, die der Bewegung des Antriebs 145 entgegen wirken. Das sind zum einen die Haft- und zum anderen die Gleitreibung. Eine erhöhte Haftreibung lässt sich an einer Veränderung des Losbrechdrucks erkennen. Die Gleitreibung führt zu einer parallelen Verschiebung der Hub-Druck-Kurve. Beide Effekte können im schlimmsten Fall dazu führen, dass das Ventil nicht mehr schließen kann.

Um dies rechtzeitig zu erkennen, kann bei einem PST die Druck- bzw. Kraft- bzw. Drehmomentreserve (Umrechnung der Druckreserve mittels der Drehmomentenkennlinie des Antriebs in die Drehmomentreserve) bestimmt werden. Ist z.B. der Prozessdruck des Prozessmediums bekannt, so kann anhand der vom Prozessdruck beaufschlagbaren Druckfläche des Ventilglieds auf die mindestens notwendige Druck- bzw. Kraft- bzw. Drehmomentreserve geschlossen werden, welche zum sicheren Schließen des Prozessventils notwendig ist.

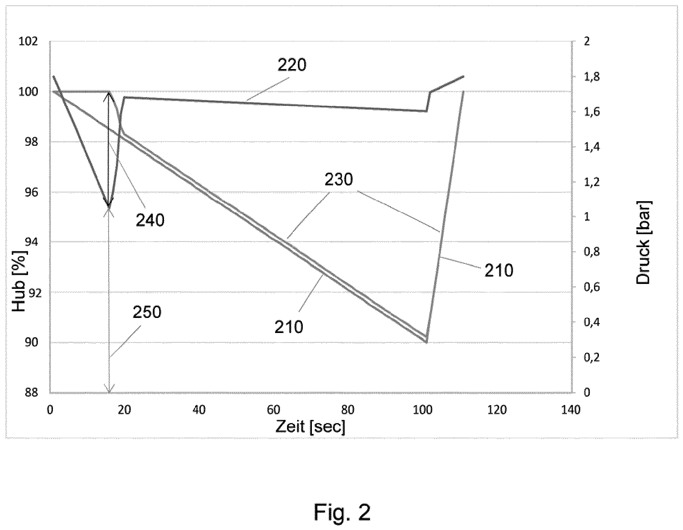

Fig. 2 zeigt den relativen Hub des Ventilglieds 120 und den Druck über der Zeit während eines *Partial Stroke Tests* (PST) an einem Sicherheitsventil 100. Es handelt sich um einen einfachwirkenden, pneumatischen Antrieb mit Federrückstellung. Die Sicherheitsstellung ist stromlos geschlossen.

Der Sollwert 210 zeigt den idealen reibungsfreien Hubverlauf beim Schließen des Ventils beim gleichmäßigen Entlüften. Der Druck wird reduziert und die Federkräfte des Antriebs 145 werden freigesetzt und bewegen das Ventilglied 120 in Richtung der Schließstellung.

Der Ist-Druckverlauf 220 zeigt zunächst ein deutliches Absenken des Drucks, bevor sich der Hub (Ist-Hub) 230 verändert. Hier zeigt sich das Losbrechen des Ventilglieds 120 aus seiner geöffneten Stellung, in der es evtl. bereits verklebt war, also der Haftreibung unterlag. Die Differenz zwischen dem anfänglichen, maximalen Druck und dem Druck im Moment des Losbrechens wird als Losbrechdruck 240 bezeichnet. Der Losbrechdruck ist der Druck bzw. die Kraft, die ausreicht, um die Haftreibung zu überwinden und das Ventil zu lösen.

Der Druck im Antriebsfluid im Moment des Losbrechens verbleibt als Reserve 250, sofern er größer 0 bar ist. Falls nicht, kann das Sicherheitsventil 100 seine Funktion nicht mehr erfüllen.

Der Druck wird nach dem Losbrechen nachgeregelt, also wieder erhöht, damit ein Überschwingen vermieden oder reduziert wird.

Nach dem Überwinden der Haftreibung und der beschleunigten Hubbewegung, findet ein gleichmäßiges Entlüften des Antriebs 145 statt (langsame Druckreduktion), bis 90% des Hubs erreicht ist. Die Ist-Hub-Kurve 230 verläuft im Bereich der Gleitreibung etwa linear und parallel der Soll-Hub-Kurve 210, um den Betrag der Gleitreibung parallel verschoben.

Nach Erreichen der 90% wird der Druck im Antrieb 145 wieder erhöht, damit das Ventilglied 120 gegen die Federkräfte wieder voll öffnet. Der PST ist abgeschlossen.

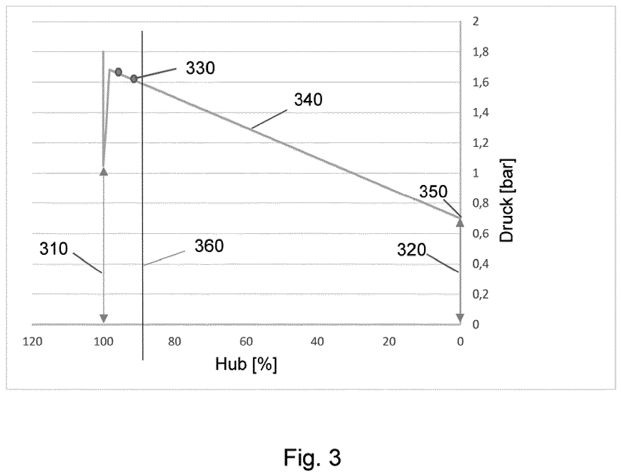

Aus Fig. 2 lässt sich durch Elimination der Zeit und Auftragen des Drucks 220 über dem Hub 230 die Hub-Druck-Kurve der Fig. 3 erstellen.

Die Schließdruck-Reserve 320 ist die Druckreserve, die verbleibt, nachdem das Sicherheitsventil geschlossen wurde. Die Schließdruck-Reserve 320, die sich bei gleichbleibender Bewegung einstellt (Gleitreibung), kann anhand von Fig. 3 ermittelt werden. Hierfür wird die Hub-Druck-Kurve gemäß Fig. 3 weiter bis zur Schließstellung (Hub = 0) extrapoliert.

Dabei gibt es verschiedene Möglichkeiten, den Verlauf der Kurve zu bestimmen. Entweder bestimmt man während der Bewegung des PST (nach Überwinden der Haftreibung) eine Geradengleichung, mit der die Extrapolation durchgeführt wird. Oder man nimmt eine Referenzkurve (Kennlinie) zur Hand, welche bei der Initialisierung bzw. Inbetriebnahme aufgenommen wurde. Weiter könnte die theoretisch ermittelte Federkennlinie ebenfalls verwendet werden.

Fig. 3 zeigt die Bestimmung der Schließdruck-Reserve 320 unter Annahme einer gleichbleibenden, linearen Bewegung über den beim PST bestimmten Bereich hinaus. Die Interpolationsgerade 340 wurde mit Hilfe von zwei gemessenen Druckpunkten 330 bestimmt. Die Schließdruck-Reserve 320 entspricht dem Druckwert 350 bei Hub = 0 auf der Interpolationsgerade 340.

Beim PST geschieht eine Bewegungsumkehr 360 (hier bei 90% des Hubs). Die Hysterese, welche sich bei der Umkehr ergibt, kann beim Ermitteln der Geradengleichung ebenfalls berücksichtigt werden (im Diagramm nicht dargestellt). Hat man mehrere gemessene Hub-Druck-Punkte 330 aus dem PST zur Verfügung, werden die für die Schließdruck-Reserve 320 ungünstigeren Punkte zur Ermittlung der Geradengleichung herangezogen.

In Fig. 3 ist die Reserve des Losbrechdrucks 310 größer als die Reserve zum vollständigen Schließen 320.

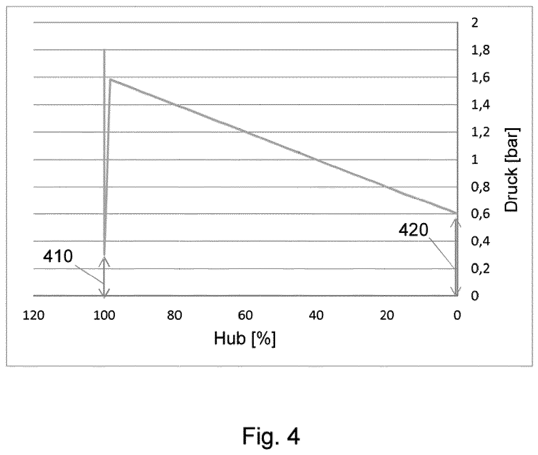

In Fig. 4 ist die Reserve des Losbrechdrucks 410 kleiner als die Reserve zum vollständigen Schließen 420.

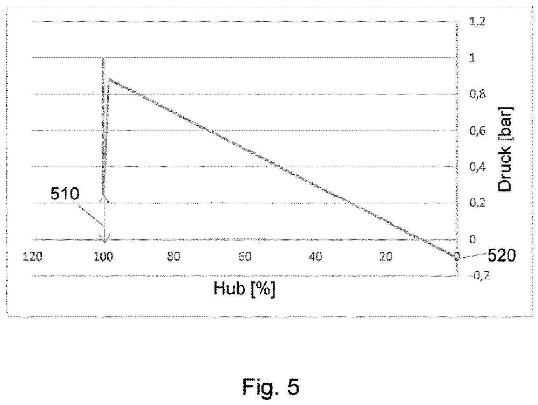

In Fig. 5 stellt sich sogar eine negative Schließdruck-Reserve 520 ein, so dass ein sicheres Schließen des Sicherheitsventils 100 nicht mehr möglich ist. Dieser Fall kann bei sehr hoher Gleitreibung z.B. an der Ventilstange auftreten. Des Weiteren zeigt Fig. 5 die Losbrech-Reserve 510 dieses Beispiels.

### Glossar

### Fluidischer Antrieb eines Ventils

Man spricht von einem fluidisch angetriebenen Ventil, wenn die Antriebsstange des Ventils von einer Membran bewegt wird, die durch ein Fluid, typischerweise Druckluft, mit Druck beaufschlagt und dadurch positioniert wird.

### Hub-Druck-Kurve

Die Hub-Druck-Kurve eines Ventils bzw. eines Teilhubtests gibt die Position des Ventilglieds, anders gesagt: den Hub, in Abhängigkeit vom Druck im Antriebsfluid des fluidisch angetriebenen Ventils an.

### Partial Stroke Test. s. Teilhubtest

### PST: s. Teilhubtest

### Teilhubtest (Partial Stroke Test, PST)

Um den sicheren Betrieb einer Armatur zu gewährleisten, wird zyklisch getestet, ob sich das Stellglied auch bewegt. Bei diesen Tests ist es nicht gewünscht, dass die Armatur vollständig in die Sicherheitsstellung verfährt, um den laufenden Betrieb nicht zu stören. Bei einem Teilhubtest wird das Stellglied nur soweit verfahren, wie erforderlich ist, um sicherzustellen, dass das Stellglied einen Teil der Strecke verfährt, ohne den Prozess der Anlage maßgeblich zu beeinflussen. Dabei wird auch getestet, ob sich das Stellglied überhaupt noch von seiner Position löst bzw. losbricht. Das Stellglied fährt nach dem Teilhubtest wieder in seine Ausgangsposition zurück. Mit diesem Test kann die grundlegende Bewegbarkeit des Stellgliedes geprüft werden.

### Ventilglied

Das Ventilglied ist dasjenige Element, das das Ventil schließt, wenn es auf den Ventilsitz gepresst wird.

### Bezugszeichen

- 100: Prozessventil
- 105: Ventilgehäuse
- 110: Zuströmseite
- 115: Abströmseite
- 120: Ventilglied
- 125: Ventilsitz
- 130: Ventilstange bzw. Antriebsstange
- 140: Stopfbuchse bzw. Dichtung
- 145: fluidischer Antrieb
- 150: Druckluftkammer
- 155: obere Kammer
- 160: Feder
- 165: Platte
- 170: Membran
- 175: Antriebsgehäuse-Abdichtung
- 180: Signalnehmer
- 210: Soll-Wert des Hubs
- 220: Ist-Wert des Drucks
- 230: Ist-Wert des Hubs
- 240: Losbrechdruck
- 250: Reserve des Losbrechdrucks
- 310: Losbrech-Reserve
- 320: Schließdruck-Reserve
- 330: zwei Punkte zur Bestimmung der Interpolationsgerade
- 340: Interpolationsgerade
- 350: Druckwert bei Hub = 0
- 360: 90% des Hubs, Ende des PST
- 410: Losbrech-Reserve
- 420: Schließdruck-Reserve
- 510: Losbrech-Reserve
- 520: negative Schließdruck-Reserve

## Patentansprüche

1. Verfahren zum Bestimmen der Funktionsfähigkeit eines fluidisch angetriebenen Sicherheitsventils mit einem Ventilglied (120) und einer Feder-Rückstellung,
1.1 wobei das Ventilglied bei einem vollständigen Abfall des Drucks des Antriebsfluids durch die Feder-Rückstellung in eine Sicherheitsstellung bewegt werden soll;
1.2 wobei das Sicherheitsventil Mittel zum Bestimmen des Drucks des Antriebsfluids aufweist;
1.2.1 wobei der Druck des Antriebsfluids gegen die Feder (160) wirkt;
1.3 wobei das Sicherheitsventil Mittel (180) zum Bestimmen der Stellung des Ventilglieds aufweist;
wobei das Verfahren die folgenden Schritte umfasst:
1.4 ein Teilhubtest wird an dem Sicherheitsventil mittels Variation des Drucks im Antriebsfluid durchgeführt;
1.5 die Stellung des Ventilglieds (230) in Abhängigkeit des Drucks (220) im Antriebsfluid wird während des Teilhubtests aufgezeichnet, wodurch eine Hub-Druck-Kurve erhalten wird;
**gekennzeichnet durch** die folgenden Schritte:
1.6 die Hub-Druck-Kurve wird über den gemessenen Bereich hinaus mathematisch modelliert;
1.7 die mathematisch ermittelte Hub-Druck-Kurve wird bis zur Sicherheitsstellung des Ventilglieds extrapoliert (340, 350);
1.8 der zu dieser Sicherheitsstellung in der mathematisch ermittelten Hub-Druck-Kurve gehörende Druck (320; 420; 520) wird ermittelt.

2. Verfahren nach dem vorhergehenden Anspruch,
**dadurch gekennzeichnet,**
2.1 dass für die Extrapolation der Hub-Druck-Kurve die Hub-Druck-Kurve in einem relevanten Bereich durch eine Geradengleichung modelliert wird; und
2.2 dass die Geradengleichung für die Hub-Druck-Kurve aus mindestens zwei während des Teilhubtests gemessenen Hub-Druck-Werten (220, 230; 330) ermittelt wird.

3. Verfahren nach Anspruch 2,
**dadurch gekennzeichnet,**
**dass** die mindestens zwei während des Teilhubtests gemessenen Hub-Druck-Werte (220, 230; 330) nach dem Überwinden der Haftreibung des Ventilglieds aufgenommen werden.

4. Verfahren nach Anspruch 1,
**dadurch gekennzeichnet,**
4.1 dass bei Inbetriebnahme des Sicherheitsventils eine Hub-Druck-Kennlinie für das Sicherheitsventil aufgenommen wird; und
4.2 dass die Hub-Druck-Kurve dadurch über den gemessenen Bereich hinaus mathematisch modelliert wird, dass die bei Inbetriebnahme des Sicherheitsventils aufgenommene Hub-Druck-Kennlinie auf einen während des Teilhubtests nach dem Überwinden der Haftreibung des Ventilglieds gemessenen Hub-Druck-Wert verschoben wird.

5. Verfahren nach Anspruch 4, **dadurch gekennzeichnet,**
**dass** die bei Inbetriebnahme des Sicherheitsventils aufgenommene Hub-Druck-Kennlinie für das Sicherheitsventil in einem Bereich nach dem Überwinden der Haftreibung des Ventilglieds durch eine Gerade angenähert wird.

6. Fluidisch angetriebenes Sicherheitsventil mit
6.1 einem Ventilglied (120) und
6.2 einer Feder-Rückstellung;
6.2.1 wobei das Ventilglied bei einem vollständigen Abfall des Drucks des Antriebsfluids durch die Feder-Rückstellung in eine Sicherheitsstellung bewegt werden soll;
6.3 Mitteln zum Bestimmen des Drucks des Antriebsfluids;
6.3.1 wobei der Druck des Antriebsfluids gegen die Feder (160) wirkt;
6.4 Mitteln (180) zum Bestimmen der Stellung des Ventilglieds;
6.5 einer Steuerung zum Durchführen des Verfahrens nach einem der Ansprüche 1 bis 5, wobei
6.5.1 die Steuerung in der Lage ist, einen Teilhubtest an dem Sicherheitsventil mittels Variation des Drucks im Antriebsfluid durchzuführen; und wobei
6.5.2 die Steuerung bei der Durchführung eines Teilhubtests
6.5.2.1 die Stellung des Ventilglieds (230) in Abhängigkeit des Drucks (220) im Antriebsfluid während des Teilhubtests aufzeichnet, wodurch eine Hub-Druck-Kurve erhalten wird;
6.5.2.2 die Hub-Druck-Kurve über den gemessenen Bereich hinaus mathematisch modelliert;
6.5.2.3 die mathematisch ermittelte Hub-Druck-Kurve bis zur Sicherheitsstellung des Ventilglieds extrapoliert (340, 350); und
6.5.2.4 den zu dieser Sicherheitsstellung in der mathematisch ermittelten Hub-Druck-Kurve gehörenden Druck (320; 420; 520) ermittelt.

## Claims

1. A method for determining the operability of a fluid driven safety valve with a valve member (120) and a spring return,
1.1 wherein the valve member is to be moved to a safety position by the spring return in case of a complete pressure drop of the driving fluid;
1.2 wherein the safety valve has means for determining the pressure of the driving fluid;
1.2.1 wherein the pressure of the driving fluid acts against the spring (160);
1.3 wherein the safety valve has means (180) for determining the position of the valve member; wherein the method comprises the following steps:
1.4 a partial stroke test is performed on the safety valve by varying the pressure in the driving fluid;
1.5 the position of the valve member (230) in dependence of the pressure (220) in the driving fluid is recorded during the partial stroke test, whereby a stroke-pressure curve is obtained;
**characterized by** the following steps:
1.6 the stroke-pressure curve is mathematically modeled beyond the measured range;
1.7 the mathematically determined stroke-pressure curve is extrapolated up to the safety position of the valve member (340, 350);
1.8 the pressure (320; 420; 520) corresponding to this safety position in the mathematically determined stroke-pressure curve is determined.

2. Method according to the preceding claim,
**characterized in that**
2.1 for the extrapolation of the stroke-pressure curve, the stroke-pressure curve is modelled in a relevant range by a linear equation; and
2.2 the linear equation for the stroke-pressure curve is determined from at least two stroke-pressure values (220, 230; 330) measured during the partial stroke test.

3. Method according to claim 2,
**characterized in that**
the at least two stroke-pressure values (220, 230; 330) measured during the partial stroke test are measured after the static friction of the valve member has been overcome.

4. Method according to claim 1,
**characterized in that**
4.1 during commissioning of the safety valve, a stroke-pressure characteristic curve for the safety valve is recorded; and
4.2 the stroke-pressure curve is mathematically modelled beyond the measured range by shifting the stroke-pressure characteristic curve recorded during commissioning of the safety valve to a stroke-pressure value measured during the partial stroke test after the static friction of the valve member has been overcome.

5. Method according to claim 4,
**characterized in that**
the stroke-pressure characteristic curve for the safety valve recorded during commissioning of the safety valve is approximated by a linear equation in a range after the static friction of the valve member has been overcome.

6. Fluid driven safety valve having
6.1 a valve member (120) and
6.2 a spring return;
6.2.1 wherein the valve member is to be moved to a safety position by the spring return in case of a complete pressure drop of the driving fluid;
6.3 means for determining the pressure of the driving fluid;
6.3.1 wherein the pressure of the driving fluid acts against the spring (160);
6.4 means (180) for determining the position of the valve member;
6.5 a control for carrying out the method according to any of claims 1 to 5, wherein
6.5.1 the control is able to perform a partial stroke test on the safety valve by varying the pressure in the driving fluid; and wherein
6.5.2 the control when performing a partial stroke test
6.5.2.1 records the position of the valve member (230) in dependence of the pressure (220) in the driving fluid during the partial stroke test, whereby a stroke-pressure curve is obtained;
6.5.2.2 mathematically models the stroke-pressure curve beyond the measured range;
6.5.2.3 extrapolates (340, 350) the mathematically determined stroke-pressure curve to the safety position of the valve member; and
6.5.2.4 determines the pressure (320; 420; 520) corresponding to this safety position in the mathematically determined stroke-pressure curve.

## Revendications

1. Procédé pour déterminer l'aptitude au fonctionnement d'une soupape de sécurité à commande fluidique avec un élément de soupape (120) et un ressort de rappel,
1.1. dans laquelle l'élément de soupape doit être amené en position de sécurité par le ressort de rappel en cas de chute complète de la pression du fluide de commande ;
1.2 dans laquelle la soupape de sécurité est dotée de moyens permettant de déterminer la pression du fluide de commande ;
1.2.1 dans laquelle la pression du fluide de commande agit contre le ressort (160) ;
1.3 dans laquelle la soupape de sécurité comprend des moyens (180) pour déterminer la position de l'élément de la soupape ;
le procédé comprenant les étapes suivantes :
1.4 un test de levée partielle est effectué pour la soupape de sécurité en faisant varier la pression du fluide de commande ;
1.5 la position de l'élément de soupape (230) en fonction de la pression (220) dans le fluide de commande est enregistrée pendant le test de levée partielle, ce qui permet d'obtenir une courbe levée-pression ;
**caractérisé par** les étapes suivantes :
1.6 la courbe levée-pression est mathématiquement modélisée au-delà de l'étendue mesurée ;
1.7 la courbe levée-pression déterminée mathématiquement est extrapolée à la position de sécurité de l'élément de soupape (340, 350) ;
1.8 la pression appartenant à cette position de sécurité dans la courbe levée-pression déterminée mathématiquement (320 ; 420 ; 520) est déterminée.

2. Procédé selon la revendication précédente,
**caractérisé en ce**
2.1 que, pour l'extrapolation de la courbe levée-pression, la courbe levée-pression est modélisée dans une zone pertinente par une équation linéaire ; et
2.2. que l'équation linéaire de la courbe levée-pression est déterminée à partir d'au moins deux valeurs levée-pression (220, 230 ; 330) mesurées pendant le test de levée partielle.

3. Procédé selon la revendication 2,
**caractérisé en ce**
**que** les au moins deux valeurs levée-pression (220, 230 ; 330) mesurées lors du test de levée partielle sont enregistrées après que l'adhérence de l'élément de soupape a été surmonté.

4. Procédé selon la revendication 1,
**caractérisé en ce**
4.1 qu'une courbe caractéristique levée-pression de la soupape de sécurité est enregistrée lors de la mise en service de la soupape de sécurité ; et
4.2 que la courbe levée-pression est mathématiquement modélisée au-delà de l'étendue mesurée en déplaçant la courbe caractéristique levée-pression enregistrée lors de la mise en service de la soupape de sécurité à une valeur levée-pression mesurée lors du test de levée partielle après que l'adhérence de l'élément de soupape a été surmonté.

5. Procédé selon la revendication 4,
**caractérisé en ce**
**que** la courbe caractéristique levée-pression de la soupape de sécurité, enregistrée lors de la mise en service de la soupape de sécurité, est approximée par une ligne droite dans une étendue après que l'adhérence de l'élément de la soupape a été surmonté.

6. Soupape de sécurité à commande fluidique avec
6.1 un élément de soupape (120) et
6.2 un ressort de rappel ;
6.2.1 dans laquelle l'élément de soupape doit être amené en position de sécurité par le ressort de rappel en cas de chute complète de la pression du fluide de commande ;
6.3 des moyens permettant de déterminer la pression du fluide de commande ;
6.3.1 dans laquelle la pression du fluide de commande agit contre le ressort (160) ;
6.4 des moyens (180) pour déterminer la position de l'élément de soupape ;
6.5 un système de commande pour la réalisation du procédé selon l'une des revendications 1 à 5, dans lequel
6.5.1. le système de commande est capable d'effectuer un test de levée partielle de la soupape de sécurité en faisant varier la pression du fluide de commande ; et dans lequel 6.5.2 le système de commande lors de la réalisation d'un test de levée partielle
6.5.2.1 enregistre la position de l'élément de soupape (230) en fonction de la pression (220) dans le fluide de commande pendant le test de levée partielle, ce qui permet d'obtenir une courbe levée-pression ;
6.5.2.2 modélise mathématiquement la courbe levée-pression au-delà de l'étendue mesurée ;
6.5.2.3 extrapole la courbe levée-pression déterminée mathématiquement jusqu'à la position de sécurité de l'élément de soupape (340, 350) ; et
6.5.2.4 détermine la pression (320 ; 420 ; 520) appartenant à cette position de sécurité dans la courbe levée-pression déterminée mathématiquement.
